# FASCICULE DE BREVET EUROPEEN

(11) **EP 3 815 892 B1**
(45) Date de publication et mention de la délivrance du brevet: **19.06.2024**
(21) Numéro de dépôt: 20201898.2
(22) Date de dépôt: 14.10.2020
(51) Int. Cl.: B29D 35/12, A43B 13/12, A43B 3/00, A43B 1/00

(54) **SEMELLE EXTÉRIEURE DE CHAUSSURE BICOLORE ET PROCÉDÉ DE FABRICATION D'UNE TELLE SEMELLE EXTÉRIEURE**
ZWEIFARBIGE SCHUHSOHLE UND VERFAHREN ZUR HERSTELLUNG DIESER SOHLE
TWO-COLOR SHOE OUTSOLE AND METHOD FOR MANUFACTURING SUCH OUTSOLE

(30) Priorité: 31.10.2019 FR 1912251
(43) Date de publication de la demande: 05.05.2021
(73) Titulaire: Christian Louboutin, 75001 Paris (FR)
(72) Inventeur: ROSETTANI, Dante, 63061 Porto Sant'Elpidio (IT); PACCAPELO, Patrik, 63811 SANT'ELPIDIO A MARE (IT)
(74) Mandataire: Plasseraud IP

(56) Documents cités:
- WO-A1-96/07536
- WO-A1-2013/045971
- KR-U- 20130 001 403
- US-B1- 9 049 900

## Description

### Domaine technique

La présente divulgation relève du domaine des chaussures, et, notamment, des chaussures pour femmes présentant des talons dits plats. Plus précisément, la présente divulgation se rapporte à une semelle extérieure de chaussure, à une semelle de chaussure comportant une telle semelle extérieure de chaussure et à une chaussure comportant une telle semelle de chaussure. La présente divulgation se rapporte par ailleurs à un procédé de fabrication d'une semelle extérieure de chaussure, à un procédé de fabrication d'une semelle de chaussure et à un procédé de fabrication d'une chaussure.

### Technique antérieure

Dans le domaine des chaussures de luxe, notamment, il est connu de munir une chaussure d'une semelle dont la semelle extérieure est bicolore. La semelle extérieure est par exemple en cuir. Le bord de la semelle extérieure, visible sur le côté de la chaussure présente généralement une première couleur, harmonieuse avec la couleur de la tige de la chaussure. Par exemple, le bord de la semelle extérieure est noir. Pour ce faire, le bord de la semelle est par exemple verni ou ciré.

Cependant, la surface inférieure de la semelle extérieure, visible sous la chaussure, peut présenter une deuxième couleur. Cette deuxième couleur peut être plus vive. Cette deuxième couleur peut être une signature de la marque de la chaussure. Par exemple, cette deuxième couleur est rouge. Cette deuxième couleur peut être obtenue au moyen d'une couche de verni ou de cirage de couleur, par exemple.

Cependant, la couleur sous la semelle a tendance à s'effacer par usure de la semelle extérieure. Le frottement sur le sol, notamment, gratte la couche colorée de la semelle extérieure. Généralement, cette couche colorée laisse alors apparaître une couche, par exemple de cuir, de couleur neutre. Ceci nuit à l'esthétique de la chaussure.

Cependant, il a été proposé de réaliser la semelle extérieure en matériau plastique, notamment en polyuréthane thermoplastique (TPU). Pour ce faire, il a été proposé de réaliser la semelle extérieure en deux pièces : une partie annulaire, définissant le bord de la semelle extérieure, est réalisé d'une première couleur, et une partie centrale, disposée à l'intérieure de la partie annulaire, et définissant la surface d'appui de la semelle extérieure sur le sol, est réalisée d'une deuxième couleur. La réalisation en plastique coloré permet que les parties annulaire et centrale soient colorées dans la masse. Ainsi, même en cas d'usure, la couleur de la semelle extérieure est conservée.

La réalisation d'une telle semelle extérieure peut alors comporter le moulage de la partie annulaire, le moulage de la partie centrale et l'assemblage des parties annulaire et centrale pour former la semelle extérieure. Par exemple, les parties annulaire et centrale sont assemblées par collage, au moyen d'une colle adaptée au collage de TPU.

Ce procédé est cependant complexe, qui comporte de nombreuses étapes délicates.

KR-U-2013 0001403 concerne une semelle de chaussure dans laquelle un corps inférieur et une partie supérieure d'attachement sont moulées en un seul bloc. US 9 049 900 81 divulgue le préambule des revendications 1 et 12.

### Résumé

La présente divulgation vient améliorer la situation.

Il est proposé un procédé de fabrication d'une semelle extérieure de chaussure, la semelle extérieure de chaussure comprenant, de préférence consistant en, une partie centrale et une partie annulaire faisant saillie latéralement du bord de la partie centrale, le procédé comprenant les étapes de:
(i) fournir la partie annulaire ; et
(ii) surmouler la partie centrale sur la partie annulaire, par moulage par injection, de manière à former une semelle extérieure dans laquelle les parties centrale et annulaire sont solidarisées.

Ainsi, avantageusement, la partie centrale de la semelle extérieure est directement moulée sur la partie annulaire. En outre, la fixation des parties centrale et annulaire est obtenue directement par le surmoulage de la partie centrale sur la partie annulaire. Le procédé de fabrication de la semelle extérieure s'en trouve facilité.

De préférence, le procédé présente une ou plusieurs des caractéristiques suivantes, prises seules ou en combinaison :
- l'étape (i) consiste à mouler la partie annulaire, par moulage par injection d'une première matière, dans un moule, le moule étant fermé au moyen d'un premier couvercle de moule, le moule et le premier couvercle de moule définissant une empreinte de la partie annulaire ;
- l'étape (ii) consiste à injecter un deuxième matériau dans le moule, fermé par un deuxième couvercle de moule, le deuxième couvercle de moule, le moule et la partie annulaire définissant une empreinte de la partie centrale ;
- le procédé comprend une étape intermédiaire entre les étapes (i) et (ii) consistant à remplacer le premier couvercle de moule par le deuxième couvercle de moule, cette étape étant de préférence mise en oeuvre automatiquement, au moyen d'une machine ;
- la partie annulaire fait saillie du bord de la partie centrale, d'une distance comprise entre 0,5 mm et 2 mm, notamment d'1 mm ;
- les premier et deuxième matériaux sont des matériaux plastiques, notamment du polyuréthane thermoplastique ou TPU ;
- les premier et deuxième matériaux sont de couleurs différentes, par exemple le premier matériau étant de couleur noire et le deuxième matériau de couleur rouge ;
- le procédé comprend une étape de refroidissement suite à l'étape de moulage de la partie centrale et/ou à l'étape de moulage de la partie annulaire, le cas échéant, l'étape de refroidissement étant de préférence réalisée le moule fermé par le premier ou le deuxième couvercle, le cas échéant, l'étape de refroidissement durant de préférence encore au moins trente seconde, de manière préférée au moins une minute, de manière encore plus préférée au moins deux minutes ;
- le premier matériau et/ou le deuxième matériau, le cas échéant, est/sont injecté/s à une température supérieure ou égale à 150 °C et/ou inférieure ou égale à 250 °C, de préférence à une température de 200 °C ; et
- le premier couvercle de moule comprend une gorge annulaire, de telle sorte que la partie annulaire moulée comprend une nervure annulaire interne.

Selon un autre aspect, il est proposé un procédé de fabrication d'une semelle de chaussure comprenant les étapes de :
(a) fournir une semelle de montage ;
(b) fournir une semelle extérieure, en mettant en oeuvre le procédé tel que décrit ci-avant dans toutes ses combinaisons ; et
(c) associer les semelles intérieure et extérieure, notamment par collage et/ou couture.

Selon un autre aspect, il est décrit un procédé de fabrication d'une chaussure, comprenant les étapes de :
(1) fournir une tige ;
(2) fournir une semelle de chaussure, en mettant en oeuvre le procédé tel que décrit ci-avant, dans toutes ses combinaisons ; et
(3) associer la tige et la semelle de chaussure, notamment par collage et/ou couture.

Selon encore un autre aspect, il est décrit une semelle extérieure de chaussure, bicolore, comprenant une partie centrale, d'une première couleur, et une partie annulaire, d'une deuxième couleur, faisant saillie latéralement du bord de la partie centrale, la partie centrale étant surmoulée par injection sur la partie annulaire, en particulier en mettant en oeuvre un procédé de fabrication d'une semelle extérieure, tel que décrit ci-avant dans toutes ses combinaisons.

La partie centrale peut présenter une surépaisseur au talon.

La partie annulaire peut comprendre une portion s'étendant sur la partie centrale, de préférence à la périphérie de la partie centrale.

Selon un autre aspect, il est proposé une semelle de chaussure comprenant une semelle extérieure telle que décrite ci-avant, dans toutes ses combinaisons, et une semelle de montage, la semelle de montage et la semelle extérieure étant fixées ensemble, notamment par collage et/ou couture.

La semelle de chaussure peut comprendre en outre un talon, interposée entre la semelle de montage et la semelle extérieure, le talon étant de préférence collé à la semelle de montage.

La semelle de chaussure peut comprendre en outre une première de propreté, disposée de telle sorte que la semelle de montage soit interposée entre la première de propreté et la semelle extérieure.

La première de propreté peut être en cuir ou en plastique. La semelle de montage peut comprendre au moins une couche de carton, de préférence au moins une pluralité de couches de carton. La semelle de montage peut être en tout ou partie, en plastique.

Selon encore un autre aspect, une chaussure comprend une tige fixée à une semelle de chaussure, telle que décrite ci-avant, dans toutes ses combinaisons.

### Brève description des dessins

D'autres caractéristiques, détails et avantages apparaîtront à la lecture de la description détaillée ci-après, et à l'analyse des dessins annexés, sur lesquels :
La figure 1 représente schématiquement une vue de côté d'une chaussure.
La figure 2 représente schématiquement une vue éclatée d'un premier exemple de semelle de chaussure pouvant être mise en oeuvre dans la chaussure de la figure 1.
La figure 3 représente schématiquement une vue éclatée d'un deuxième exemple de semelle de chaussure pouvant être mise en oeuvre dans la chaussure de la figure 1.
La figure 4 représente schématiquement une vue de dessous d'un exemple de semelle extérieure pouvant être mise en oeuvre dans les semelles de chaussure des figures 2 et 3.
La figure 5 représente schématiquement en perspective, un détail de la vue de dessous de la semelle extérieure de la figure 4.
La figure 6 représente schématiquement une vue de dessus d'un détail de la semelle extérieure de la figure 4.
La figure 7 représente schématiquement une vue de dessous du détail de la figure 6.
La figure 8 représente schématiquement une coupe de la semelle extérieure de la figure 4.

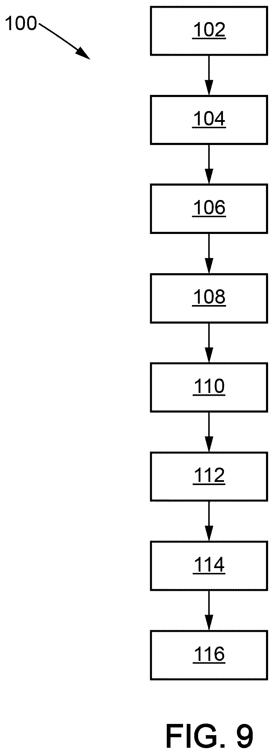

La figure 9 représente un ordinogramme d'un procédé de fabrication de la chaussure de la figure 1.
La figure 10 représente schématiquement un moule mis en oeuvre dans le procédé illustré à la figure 9.
La figure 11 représente schématiquement un premier couvercle de moule pouvant être mis en oeuvre avec le moule de la figure 10, dans le procédé de la figure 9.
La figure 12 représente schématiquement un deuxième couvercle de moule pouvant être mis en oeuvre avec le moule de la figure 10, dans le procédé de la figure 9.

### Description des modes de réalisation

Dans la suite de la description, les éléments identiques ou de fonction identique portent le même signe de référence. Ces éléments ne sont pas décrits en détail en regard de chaque figure. Au contraire, à fin de concision de la présente description, seules les différences entre les divers exemples sont décrites en détail.

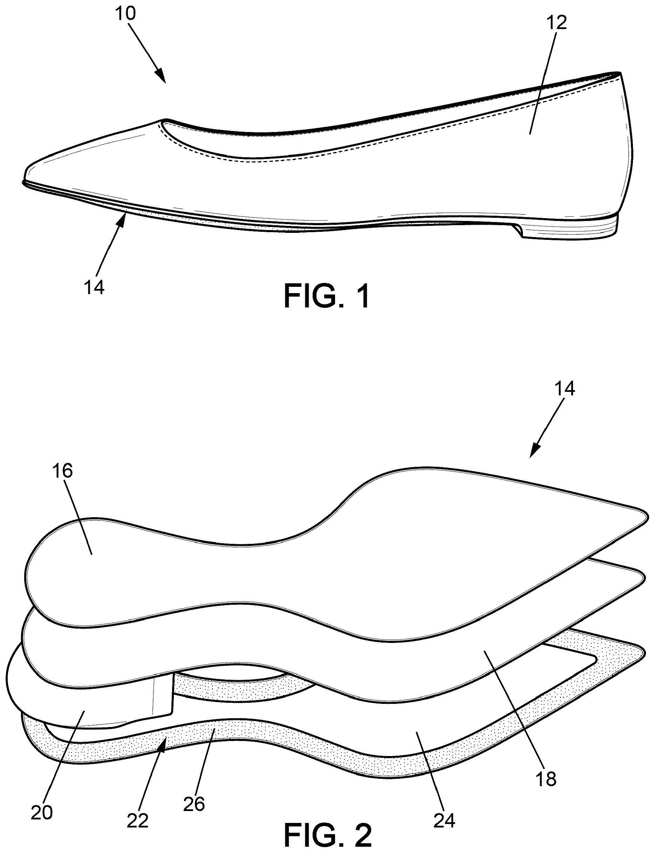

La figure 1 représente un exemple de chaussure 10. De manière classique, la chaussure 10 comporte une tige 12 et une semelle de chaussure 14. La tige 12, qui peut être constituée de l'assemblage de plusieurs pièces, constitue le dessus de la chaussure. La tige 12 forme à la fois la partie visible (ou extérieure) du dessus de la chaussure et la doublure éventuelle, à l'intérieure de la chaussure. La tige 12 et la semelle de chaussure 14 sont assemblées ensemble par tout moyen accessible à l'homme de l'art, notamment par collage et/ou couture.

Un exemple de semelle de chaussure 14 est illustré à la figure 2. Telle qu'illustrée sur cette figure 2, la semelle de chaussure 14 comprend une première de propreté 16, une semelle de montage 18, un talon 20 et une semelle extérieure de chaussure 22.

De manière classique, la première de propreté 16 est par exemple en cuir ou en plastique. La première de propreté peut être glissée dans la tige 12, une fois la tige 12 fixée à la semelle de chaussure 14. Alternativement, la première de propreté 16 peut être collée et/ou cousue à la semelle de montage 18 et/ou la semelle extérieure 22.

La semelle de montage 18 (ou semelle intérieure ou encore première de montage) est formée d'au moins une couche de carton, de préférence d'une pluralité de couches de carton. Alternativement, la semelle de montage 18 peut également être en plastique. La semelle de montage 18 peut comporter en outre un ou plusieurs morceaux de tissus associés à la au moins une couche de carton. La semelle de montage 18 est fixée à la semelle extérieure 22. Notamment, la semelle de montage 18 est collée et/ou cousue à la semelle extérieure 22. La semelle de montage 18 vise notamment à assurer le confort du porteur de la chaussure 10, en assurant une certaine isolation vis-à-vis du sol sur lequel la chaussure 10 repose.

Dans l'exemple illustré à la figure 2, un talon 20 est interposé entre la semelle de montage 18 et la semelle extérieure 22. Ce talon 20 est par exemple en matière plastique. Notamment, le talon 20 est formé par un bloc de matériau plastique, destiné à être disposé à l'arrière de la semelle de chaussure 14. Le talon 20 peut être collé à la semelle de montage 18 et/ou à la semelle extérieure 22. Le talon 20 permet de surélever le talon de la personne chaussée de la chaussure 10.

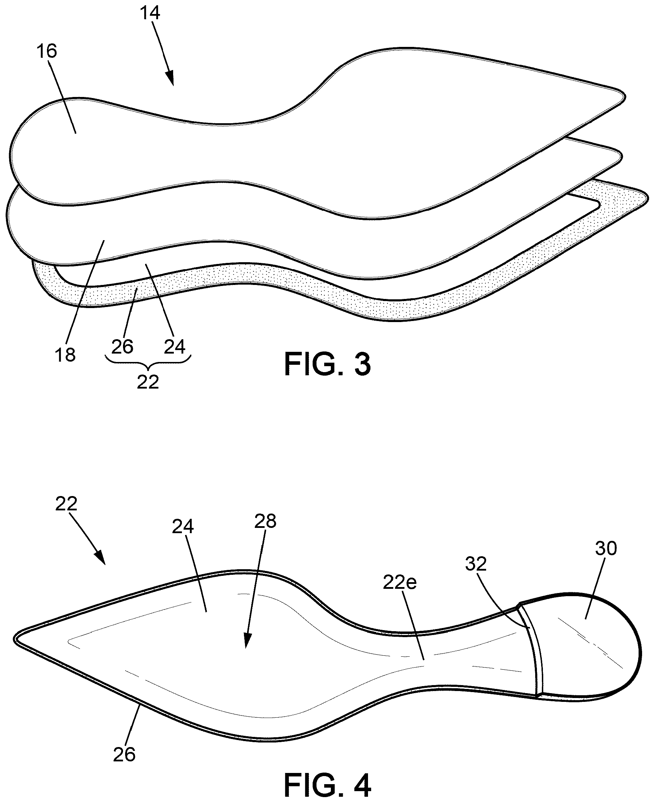

Comme visible sur la figure 3, une semelle de chaussure 14 peut également être dépourvue d'un tel talon 20.

Enfin, une semelle de chaussure 14, telle qu'illustrée sur la figure 2 ou 3, comprend une semelle extérieure 22, destinée à être en contact avec le sol. C'est cette semelle extérieure 22 qui s'use lorsque la chaussure 10 est portée, notamment par friction sur le sol lors de la marche. Cette semelle extérieure 22 vise ainsi à limiter l'usure des autres couches de la semelle de chaussure 14.

Comme illustrée, la semelle extérieure 22 comporte essentiellement une partie centrale 24 et une partie annulaire 26. La partie centrale 24 définit notamment la surface 28 de la semelle extérieure 22 qui est en contact avec le sol lorsque que la chaussure 10 est portée. Telle qu'illustrée à la figure 4, la partie centrale 24 peut notamment définir un talon 30. Le talon 30 est défini par une partie de la semelle extérieure 22 présentant une épaisseur plus importante que le reste de la semelle extérieure 22. Le talon 30 est par exemple délimité par une marche 32 sur la surface extérieure 22e de la semelle extérieure 22. Le talon 30 présente ici une épaisseur relativement réduite, la chaussure 10 étant du type à talon plat. Par exemple, le talon 30 a une épaisseur inférieure à 3 cm, de préférence inférieure à 2,5 cm.

Dans l'exemple illustré, les parties centrale et annulaire 24, 26 sont de couleurs différentes pour assurer un effet esthétique sur la chaussure 10. Notamment, la partie annulaire 26, visible sur le côté de la chaussure 10, lorsque la chaussure 10 est portée, est de couleur noire. La couleur noire est en effet une couleur relativement neutre qui se marie esthétiquement avec un grand nombre de couleurs qui peuvent être portées par la tige 12 de la chaussure 10. La partie centrale 24 est ici de couleur rouge, couleur signature. D'autres couleurs peuvent cependant être imaginées pour les parties centrale 24 et/ou annulaire 26.

Avantageusement, la partie centrale 24 et/ou la partie annulaire 26 est/sont en matériau plastique, notamment en polyuréthane thermoplastique ou TPU. Ainsi, avantageusement, la partie centrale 24 et/ou la partie annulaire 26 sont colorées dans la masse, de telle sorte que l'usure éventuelle de ces parties centrale et/ou annulaire 24, 26 altère peu, voire pas du tout, leur couleur.

Comme cela est notamment visible sur les figures 4, 5 et 7, la partie annulaire 26 s'étend tout autour de la partie centrale 24. Ainsi, la partie annulaire 26 définit le bord latérale 22l de la semelle extérieure 22. En d'autres termes, la partie annulaire 26 fait saillie latéralement du bord de la partie centrale 22, ici de telle manière que la portion en saillie de la partie annulaire 26 recouvre intégralement le bord latéral de la partie centrale 22. La partie annulaire 26 permet ainsi de donner une couleur différente au bord latéral (ou arête latérale) 22l de la semelle extérieure et à la surface extérieure 22e (ou inférieure) de la semelle extérieure 22, destinée à être orientée vers le sol. La partie annulaire 26 fait par exemple saillie latéralement du bord de la partie centrale 22, sur une distance d comprise entre 0,5 mm et 2 mm, notamment sur un 1 mm.

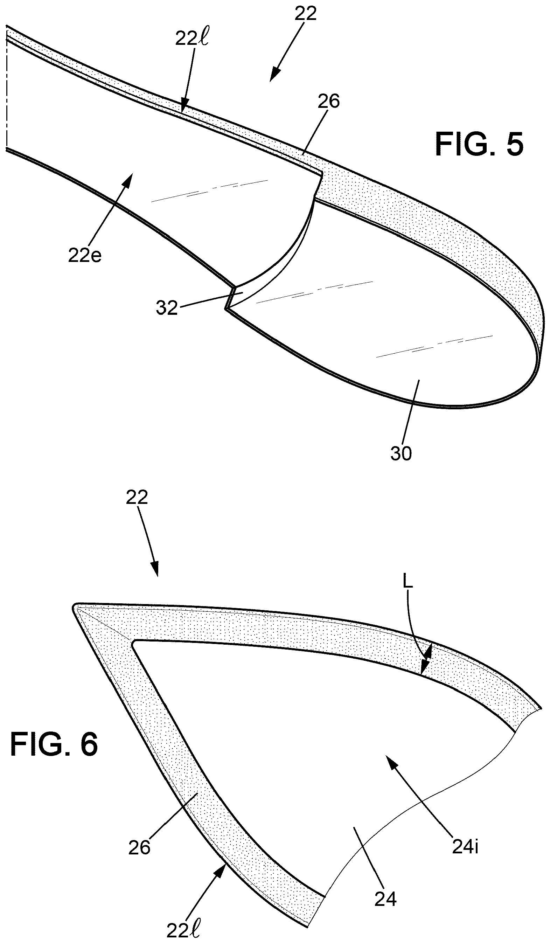

Comme cela est visible à la figure 5, notamment, la partie annulaire 26 peut présenter une hauteur variable, par exemple pour recouvrir le bord latéral du talon 30, qui est plus haut que le reste de la semelle extérieure 22. La partie annulaire 26 peut également comporter une marche, adaptée aux dimensions de la marche 32 définissant le talon 30.

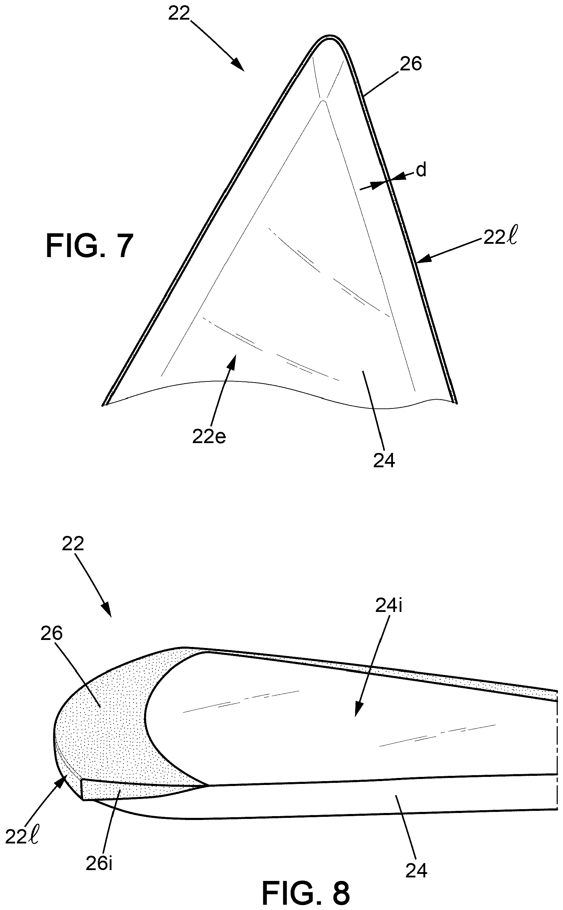

Par ailleurs, comme cela est visible sur les figures 7 et 8, notamment, la partie annulaire 26 présente une portion interne 26i qui s'étend sur la surface interne 24i de partie centrale 24, en périphérie de la partie centrale 24. La surface interne 24i de la partie centrale 24 s'entend de la face de la partie centrale 24, opposée à la surface extérieure 22e. Cette portion interne 26i de la partie annulaire 26 facilite notamment la fixation des parties centrale et annulaire 24, 26 ensemble, comme il sera discuté plus loin. Ainsi, la portion interne 26i de la partie annulaire 26 peut présenter une section effilée vers l'intérieur, comme cela est nettement visible sur la figure 8. Avantageusement, cette section effilée vers l'intérieure de la portion interne 26i de la partie annulaire 26 recouvre une section effilée vers l'extérieur de la partie centrale 24. Ainsi, l'épaisseur de la semelle extérieure 22 est sensiblement constante là où les sections effilées de la partie centrale 24 et de la portion interne 26i de la partie annulaire 26 se superposent. Avantageusement, la fixation des parties centrale 24 et annulaire 26 est notamment réalisée au niveau de cette superposition des sections effilées de la partie centrale 24 et de la portion interne 26i de la partie annulaire 26.

Comme cela est visible en comparant les figures 5 et 8, la partie annulaire 26 peut s'étendre, notamment sur une portion avant, sensiblement au-dessus de la partie centrale 24. Alternativement, la partie annulaire 26 peut comprendre une portion s'étendant au niveau de la partie centrale 24, pour recouvrir latéralement le bord de la partie centrale 24, notamment au niveau du talon 30. Dans ce cas, la partie annulaire 26 affleure la partie centrale 24, au niveau de la surface extérieure 22e de la semelle extérieure 22. Selon encore une autre alternative, la partie annulaire 26 peut s'étendre au-dessus de la partie centrale, au niveau d'une portion avant, et recouvrir latéralement le bord de la partie centrale 24, au niveau du talon 30.

Alternativement la partie centrale 24 présente un renfoncement de forme complémentaire à la forme d'une portion interne de la partie annulaire 26, de préférence de telle sorte qu'une arrête latérale seulement de la partie annulaire 26 fasse saillie latéralement de la partie centrale 24, en particulier s'étende en dehors du renfoncement de la partie centrale 24. Dans ce cas, en particulier, la portion interne de la partie annulaire 26 peut être d'épaisseur sensiblement constante, notamment dans le renfoncement de la partie centrale.

La partie annulaire 26 peut également présenter une largeur L comprise entre 5 mm et 10 mm, notamment une largeur L de 9 mm.

Dans la suite, on décrit un exemple de procédé 100 de fabrication de la chaussure 10.

Dans un premier temps, on procède à la fabrication de la semelle extérieure 22.

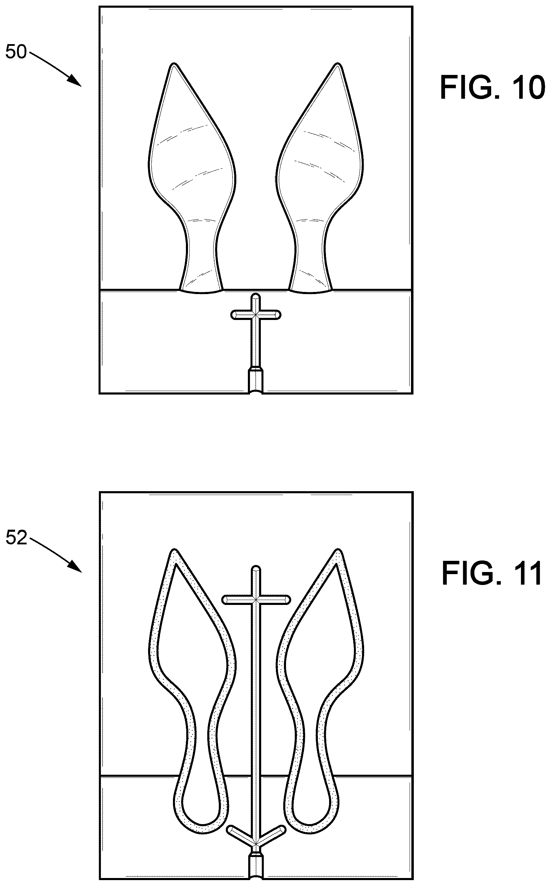

Pour ce faire, au cours d'une première étape d'injection 102, on moule la partie annulaire 26 de la semelle extérieure 22, par moulage par injection d'une première matière plastique, dans un moule 50. Durant cette première étape d'injection 102, le moule 50 est fermé au moyen d'un premier couvercle de moule 52. Comme cela est visible sur les figures 10 et 11, le moule 50 et le premier couvercle de moule 52 définissent ensemble une empreinte de la partie annulaire 26 de la semelle extérieure 22. En l'espèce, le moule 50 et le premier couvercle de moule 52 définissent deux empreintes correspondant à une partie annulaire 26 de semelle extérieure 22 de pied gauche et à une partie annulaire 26 de semelle extérieure 22 de pied droit.

Durant cette première étape d'injection 102 d'une première matière plastique pour former la partie annulaire 26, la première matière plastique peut par exemple être à une température supérieure ou égale à 150 °C et/ou inférieure ou égale à 250 °C, de préférence à une température sensiblement égale à 200 °C.

Une fois l'injection de la ou des parties annulaires 26 réalisée, le procédé 100 peut comprendre une étape 104 de refroidissement de la matière injectée. Le moule 50 peut alors rester fermé par le premier couvercle de moule 52 durant une durée par exemple supérieure à trente secondes, de préférence supérieure à une minute, de préférence encore supérieure à deux minutes. Une fois la première matière injectée refroidie, le premier couvercle 52 peut être retiré et un ébavurage de la ou des parties annulaires 26 moulées, peut être réalisé. En d'autres termes, on procède alors aux retrait des portions injectées à l'étape 102, qui sont superflues de la partie annulaire 26.

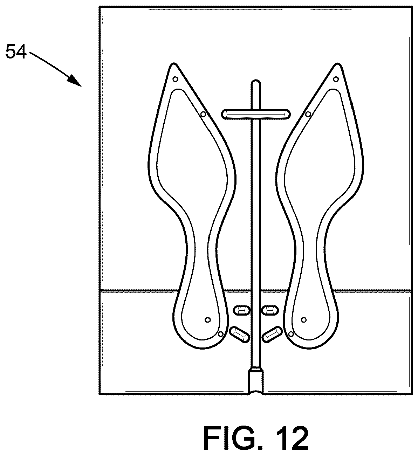

Le premier couvercle 52 peut alors être remplacé par un deuxième couvercle 54, visible sur la figure 12, au cours d'une étape 106 de remplacement du couvercle du moule 50. Avantageusement, cette étape de remplacement du premier couvercle 52 par le deuxième couvercle 54 peut être mise en oeuvre automatiquement, notamment au moyen d'une machine. La machine mise en oeuvre peut alors, avantageusement, être programmée pour réaliser les différentes injections réalisées au cours du procédé de fabrication de la semelle extérieure 22.

Une fois le moule 50 fermé par le deuxième couvercle 54, on procède au moulage par injection de la partie centrale 24 de la semelle extérieure 22, au cours d'une deuxième étape d'injection 106. Pour ce faire, on injecte un deuxième matériau plastique. Les premier et deuxième matériaux plastiques peuvent être identiques, à la couleur près. Le deuxième matériau est par exemple injecté à une température supérieure ou égale à 150 °C et/ou inférieure ou égale à 250 °C, de préférence à une température sensiblement égale à 200 °C.

Il est à noter ici que le deuxième couvercle 54 définit, avec le moule 50 et les parties annulaires 26 restées dans le moule 50, deux empreintes correspondant à une partie centrale 24 de pied gauche et à une partie centrale 24 de pied droit.

On peut noter ici que la partie centrale 24 est surmoulée sur la partie annulaire 26, de manière qu'une bande de la partie annulaire 26 - qui peut correspondre à la portion interne 26i de la partie annulaire - s'étende en contact avec une portion périphérique de la surface intérieure 24i, ce qui permet une meilleure fixation des parties centrale et annulaire 24, 26 ensemble, comparé au cas où la partie annulaire 26 ne s'étendrait que tout autour de la partie centrale 24.

Une fois l'injection de la ou des parties centrales 24 réalisée, le procédé 100 peut comprendre une étape 108 de refroidissement de la deuxième matière injectée. Le moule 50 peut alors rester fermé par le deuxième couvercle de moule 54 durant une durée par exemple supérieure à trente secondes, de préférence supérieure à une minute, de préférence encore supérieure à deux minutes. Une fois la deuxième matière injectée refroidie, le deuxième couvercle 54 peut être retiré et un ébavurage de la ou des parties centrales 26 moulées, peut être réalisé. En d'autres termes, on procède alors aux retrait des portions injectées à l'étape 106, qui sont superflues de la partie centrale 26 et, plus généralement, de la semelle extérieure 22.

On fournit ainsi une semelle extérieure 22.

Le procédé 100 de fabrication de la chaussure 10 peut alors se poursuivre par la fabrication de la semelle de chaussure 14 de la chaussure 10. Pour ce faire, on fournit ici, outre la semelle extérieure 22 obtenue à l'étape 108, une première de propreté 16, une semelle de montage 18 et un talon 20, le cas échéant, au cours d'une étape 110.

À l'étape 112 suivante, on associe alors la première de propreté 16, la semelle de montage 18, le talon 20, le cas échéant, et la semelle extérieure 22 pour former une semelle de chaussure 14. Notamment, on fixe ensemble au moins certains des éléments constitutifs de la semelle de chaussure 14, par exemple par collage et/ou couture.

On fournit ainsi, à la fin de l'étape 112, une semelle de chaussure 14.

Le procédé 100 de fabrication d'une chaussure se poursuit à l'étape 114 consistant à fournir une tige 12 de la chaussure 10.

Enfin, l'ultime étape 116 consiste à associer la tige 12 et la semelle de chaussure 14 de manière à former une chaussure 10. Notamment, la tige 12 et la semelle de chaussure 14 sont fixées ensemble, par exemple par collage et/ou couture.

L'invention n'est pas limitée aux exemples indiqués ci-avant, mais est au contraire susceptible de nombreuses variantes accessibles à l'homme de l'art.

Selon une variante préférée du procédé de fabrication de la semelle extérieure, le procédé ne nécessite aucune étape d'ébavurage. Il est ainsi possible de procéder aux deux injections successives très rapidement, sans aucune intervention sur le résultat du premier moulage. En outre, la semelle extérieure obtenue après la deuxième injection peut avantageusement être mise en oeuvre telle qu'elle est obtenue directement après la deuxième injection.

Par ailleurs, selon un mode de réalisation non illustré, le moule 50 comprend une gorge annulaire. Cette gorge annulaire permet un moulage d'une partie annulaire 26 présentant une nervure annulaire interne. En d'autres termes, la nervure annulaire s'étend sur le bord opposé de la partie annulaire, par rapport à la portion destinée à faire saillie de la partie centrale 24. Cette nervure annulaire permet notamment de limiter les risques de coulure de la deuxième matière, au cours de l'étape de moulage par injection de la partie centrale 24. Cette nervure annulaire a en quelque sorte une fonction de joint pour étanchéifier l'empreinte de la partie centrale 24, au cours de cette deuxième étape d'injection. De préférence, le procédé de fabrication de la semelle extérieure comprend alors une étape de retrait de cette nervure annulaire, après les deux étapes de moulage par injection, ceci afin d'obtenir une semelle extérieure dont la surface supérieure est lisse et/ou plane.

## Revendications

1. Procédé de fabrication d'une semelle extérieure de chaussure (22), la semelle extérieure de chaussure (22) comprenant, de préférence consistant en, une partie centrale (24) et une partie annulaire (26) faisant saillie latéralement du bord de la partie centrale (24), **caractérisé en ce que** le procédé comprend les étapes de:
(i) fournir la partie annulaire (26) ; et
(ii) surmouler la partie centrale (24) sur la partie annulaire (26), par moulage par injection, de manière à former une semelle extérieure (22) dans laquelle les parties centrale (24) et annulaire (26) sont solidarisées.

2. Procédé selon la revendication 1, dans lequel l'étape (i) consiste à mouler la partie annulaire (26), par moulage par injection d'une première matière, dans un moule (50), le moule (50) étant fermé au moyen d'un premier couvercle de moule (52), le moule (50) et le premier couvercle de moule (52) définissant une empreinte de la partie annulaire (26).

3. Procédé selon la revendication 2, dans lequel l'étape (ii) consiste à injecter un deuxième matériau dans le moule (50), fermé par un deuxième couvercle de moule (54), le deuxième couvercle de moule (54), le moule (50) et la partie annulaire (26) définissant une empreinte de la partie centrale (24), le procédé comprenant de préférence une étape intermédiaire entre les étapes (i) et (ii) consistant à remplacer le premier couvercle de moule (52) par le deuxième couvercle de moule (54), cette étape étant de préférence encore mise en oeuvre automatiquement, au moyen d'une machine.

4. Procédé selon l'une quelconque des revendications précédentes, dans lequel la partie annulaire (26) fait saillie du bord de la partie centrale (24), d'une distance (d) comprise entre 0,5 mm et 2 mm, notamment d'1 mm.

5. Procédé selon l'une quelconque des revendications précédentes, en combinaison avec la revendication 3, dans lequel les premier et deuxième matériaux sont des matériaux plastiques, notamment du polyuréthane thermoplastique ou TPU.

6. Procédé selon l'une quelconque des revendications précédentes en combinaison avec la revendication 3, dans lequel les premier et deuxième matériaux sont de couleurs différentes, par exemple le premier matériau étant de couleur noire et le deuxième matériau de couleur rouge.

7. Procédé selon l'une quelconque des revendications précédentes, comprenant une étape de refroidissement suite à l'étape de moulage de la partie centrale (24) et/ou à l'étape de moulage de la partie annulaire (26), le cas échéant, l'étape de refroidissement étant de préférence réalisée le moule (50) fermé par le premier (52) ou le deuxième (54) couvercle, le cas échéant, l'étape de refroidissement durant de préférence encore au moins trente seconde, de manière préférée au moins une minute, de manière encore plus préférée au moins deux minutes.

8. Procédé selon l'une quelconque des revendications précédentes, dans lequel le premier matériau et/ou le deuxième matériau, le cas échéant, est/sont injecté/s à une température supérieure ou égale à 150 °C et/ou inférieure ou égale à 250 °C, de préférence à une température de 200 °C.

9. Procédé selon l'une quelconque des revendications précédentes, en combinaison avec la revendication 2, dans lequel le premier couvercle de moule (52) comprend une gorge annulaire, de telle sorte que la partie annulaire (26) moulée comprend une rainure annulaire interne.

10. Procédé de fabrication d'une semelle de chaussure (14) comprenant les étapes de :
(a) fournir une semelle de montage (18) ;
(b) fournir une semelle extérieure (22), en mettant en oeuvre le procédé selon l'une quelconque des revendications précédentes ; et
(c) associer les semelles intérieure (18) et extérieure (22), notamment par collage et/ou couture.

11. Procédé de fabrication d'une chaussure (10), comprenant les étapes de :
(1) fournir une tige (12) ;
(2) fournir une semelle de chaussure (14), en mettant en oeuvre le procédé selon la revendication 11 ; et
(3) associer la tige (12) et la semelle de chaussure (14), notamment par collage et/ou couture.

12. Semelle extérieure de chaussure (22), bicolore, comprenant une partie centrale (24), d'une première couleur, et une partie annulaire (26), d'une deuxième couleur, faisant saillie latéralement du bord de la partie centrale (24), **caractérisée en ce que** la partie centrale (24) étant surmoulée par injection sur la partie annulaire (26), en particulier en mettant en oeuvre un procédé de fabrication d'une semelle extérieure selon l'une quelconque des revendications 1 à 10, dans laquelle, de préférence, la partie centrale (24) présente une surépaisseur au talon (30) et/ou la partie annulaire (26) comprend une portion (26i) s'étendant sur la partie centrale (24), de préférence encore à la périphérie de la partie centrale (24).

13. Semelle de chaussure (14) comprenant une semelle extérieure (22) selon la revendication 12, et une semelle de montage (18), la semelle de montage (18) et la semelle extérieure (22) étant fixées ensemble, notamment par collage et/ou couture, la semelle comprenant en outre, de préférence, un talon (20), interposée entre la semelle de montage (18) et la semelle extérieure (22), le talon (20) étant de préférence encore collé à la semelle de montage (18).

14. Semelle de chaussure selon la revendication 13, comprenant en outre une première de propreté (16), disposée de telle sorte que la semelle de montage (18) soit interposée entre la première de propreté (16) et la semelle extérieure (22), dans laquelle, de préférence, la première de propreté (16) est en cuir ou en plastique et/ou la semelle de montage (18) comprend au moins une couche de carton, de préférence encore au moins une pluralité de couches de carton ou est en tout ou partie, en plastique.

15. Chaussure (10) comprenant une tige (12) fixée à une semelle de chaussure (14) selon la revendication 13 ou 14.

## Patentansprüche

1. Verfahren zur Herstellung einer Schuhaußensohle (22), wobei die Schuhaußensohle (22) einen zentralen Teil (24) und einen von dem Rand des zentralen Teils (24) seitlich vorspringenden ringförmigen Teil (26) aufweist, vorzugsweise aus dem zentralen Teil (24) und dem ringförmigen Teil (26) besteht, **dadurch gekennzeichnet, dass** das Verfahren die Schritte aufweist:
(i) Bereitstellen des ringförmigen Teils (26); und
(ii) Formen des zentralen Teils (24) an den ringförmigen Teil (26) durch Spritzgießen, um auf diese Weise eine Außensohle (22) zu bilden, in der der zentrale Teil (24) und der ringförmige Teil (26) miteinander verbunden sind.

2. Verfahren nach Anspruch 1, in welchem der Schritt (i) darin besteht, den ringförmigen Teil (26) in einem Formwerkzeug (50) durch Spritzgießen eines ersten Materials zu formen, wobei das Formwerkzeug (50) mit einem ersten Formwerkzeugdeckel (52) geschlossen ist, wobei das Formwerkzeug (50) und der erste Formwerkzeugdeckel (52) einen Abdruck des ringförmigen Teils (26) definieren.

3. Verfahren nach Anspruch 2, in welchem der Schritt (ii) darin besteht, ein zweites Material in das mit einem zweiten Formwerkzeugdeckel (54) geschlossene Formwerkzeug (50) zu spritzen, wobei der zweite Formwerkzeugdeckel (54), das Formwerkzeug (50) und der ringförmige Teil (26) einen Abdruck des zentralen Teils (24) definieren, wobei das Verfahren vorzugsweise einen Zwischenschritt zwischen den Schritten (i) und (ii) aufweist, der darin besteht, den ersten Formwerkzeugdeckel (52) durch den zweiten Formwerkzeugdeckel (54) zu ersetzen, wobei wiederum vorzugsweise dieser Schritt automatisch mithilfe einer Maschine ausgeführt wird.

4. Verfahren nach einem der vorstehenden Ansprüche, in welchem der ringförmige Teil (26) von dem Rand des zentralen Teils (24) eine Distanz (d) vorspringt, die zwischen 0,5mm und 2mm, insbesondere 1mm, beträgt.

5. Verfahren nach einem der vorstehenden Ansprüche in Kombination mit Anspruch 3, in welchem das erste und das zweite Material Kunststoffmaterialien sind, insbesondere thermoplastisches Polyurethan oder TPU.

6. Verfahren nach einem der vorstehenden Ansprüche in Kombination mit Anspruch 3, in welchem das erste und das zweite Material von unterschiedlicher Farbe sind, beispielsweise das erste Material von schwarzer Farbe und das zweite Material von roter Farbe ist.

7. Verfahren nach einem der vorstehenden Ansprüche, aufweisend einen Kühlschritt im Anschluss an den Schritt des Spritzgießens des zentralen Teils (24) und/oder an den Schritt des Spritzgießens des ringförmigen Teils (26), wobei der Kühlschritt gegebenenfalls vorzugsweise mit geschlossenem Formwerkzeug (50) durchgeführt wird, das mit dem ersten (52) oder dem zweiten (54) Deckel geschlossen ist, wobei gegebenenfalls der Kühlschritt bevorzugt mindestens dreißig Sekunden, vorzugsweise mindestens eine Minute, noch stärker bevorzugt mindestens zwei Minuten dauert.

8. Verfahren nach einem der vorstehenden Ansprüche, in welchem gegebenenfalls das erste Material und/oder das zweite Material bei einer Temperatur höher als oder gleich 150°C und/oder niedriger als oder gleich 250°C, vorzugsweise bei einer Temperatur von 200°C, eingespritzt wird/werden.

9. Verfahren nach einem der vorstehenden Ansprüche in Kombination mit Anspruch 2, in welchem der erste Formwerkzeugdeckel (52) eine ringförmige Auskehlung aufweist, derart, dass der spritzgegossene ringförmige Teil (26) eine ringförmige Innenrille aufweist.

10. Verfahren zur Herstellung einer Schuhsohle (14) aufweisend die Schritte:
(a) Bereitstellen einer Montagesohle (18);
(b) Bereitstellen einer Außensohle (22) durch Ausführen des Verfahrens nach einem der vorstehenden Ansprüche; und
(c) Verbinden der Innensohle (18) und der Außensohle (22), insbesondere durch Kleben und/oder Nähen.

11. Verfahren zur Herstellung eines Schuhs (10), aufweisend die Schritte:
(1) Bereitstellen eines Schafts (12);
(2) Bereitstellen einer Schuhsohle (14) durch Ausführen des Verfahrens nach Anspruch 11; und
(3) Verbinden des Schafts (12) und der Schuhsohle (14), insbesondere durch Kleben und/oder Nähen.

12. Zweifarbige Schuhaußensohle (22), aufweisend einen zentralen Teil (24) einer ersten Farbe und einen von dem Rand des zentralen Teils (24) seitlich vorspringenden ringförmigen Teil (26) einer zweiten Farbe,
**dadurch gekennzeichnet, dass** der zentrale Teil (24) durch Spritzgießen an den ringförmigen Teil (26) geformt worden ist, insbesondere durch Ausführen eines Verfahrens zur Herstellung einer Außensohle nach einem der Ansprüche 1 bis 10, wobei vorzugsweise der zentrale Teil (24) eine Überdicke am Absatz (30) aufweist und/oder der ringförmige Teil (26) einen Bereich (26i) aufweist, der sich über den zentralen Teil (24) erstreckt, vorzugsweise am Umfang des zentralen Teils (24).

13. Schuhsohle (14) aufweisend eine Außensohle (22) nach Anspruch 12 und eine Montagesohle (18), wobei die Montagesohle (18) und die Außensohle (22) aneinander befestigt sind, insbesondere durch Kleben und/oder Nähen, wobei die Sohle vorzugsweise ferner einen zwischen der Montagesohle (18) und der Außensohle (22) angeordneten Absatz (20) aufweist, wobei wiederum vorzugsweise der Absatz (20) an die Montagesohle (18) geklebt ist.

14. Schuhsohle nach Anspruch 13, aufweisend ferner eine Reinhaltungseinlegesohle (16), die derart angeordnet ist, dass die Montagesohle (18) zwischen der Reinhaltungseinlegesohle (16) und der Außensohle (22) angeordnet ist, in welcher vorzugsweise die Reinhaltungseinlegesohle (16) aus Leder oder Kunststoff besteht und/oder die Montagesohle (18) mindestens eine Kartonschicht, vorzugsweise mindestens mehrere Kartonschichten aufweist oder ganz oder teilweise aus Kunststoff besteht.

15. Schuh (10) aufweisend einen Schaft (12), der an einer Schuhsohle (14) nach Anspruch 13 oder 14 befestigt ist.

## Claims

1. A fabrication process for a shoe outer sole (22), wherein the shoe outer sole (22) comprises, preferably consists of, a central part (24) and an annular part (26) projecting laterally from the edge of the central part (24), **characterized in that** the process comprises the steps of:
(i) supplying the annular part (26); and
(ii) overmolding the central part (24) on the annular part (26), by injection molding, so as to form an outer sole (22) in which the central (24) and annular (26) parts are securely joined.

2. The process according to claim 1, wherein the step (i) consists of molding the annular part (26), by injection molding of a first material, in a mold (50), where the mold (50) is closed by a first mold cover (52), and where the mold (50) and the first mold cover (52) define an imprint of the annular part (26).

3. The process according to claim 2, wherein the step (ii) consists of injecting a second material in the mold (50), closed by a second mold cover (54), where the second mold cover (54), the mold (50) and the annular part (26) define an imprint of the central part (24), the process preferably comprising comprising an intermediate step between the steps (i) and (ii) consisting of replacing the first mold cover (52) by the second mold cover (54), where this step is preferably implemented automatically by means of a machine.

4. The process according to any one of the preceding claims, wherein the annular part (26) projects from the edge of the central part (24), by a distance (d) comprised between 0.5 mm and 2 mm, notably 1 mm.

5. The process according to any one of the preceding claims, in combination with claim 3, wherein the first and second materials are plastics, in particular thermoplastic polyurethane or TPU.

6. The process according to any one of the preceding claims, in combination with claim 3, wherein the first and second materials are different colors, for example the first material is black and the second material is red.

7. The process according to any one of the preceding claims comprising a cooling step following the step of molding the central part (24) and/or the step of molding the annular part (26), as applicable, where the cooling step is preferably done with the mold (50) closed by the first (52) or the second (54) cover, as applicable, and where the cooling step again preferably lasts at least 30 seconds, preferably at least 1 minute, still more preferably at least 2 minutes.

8. The process according to any one of the preceding claims, wherein the first material and/or the second material, as applicable, is/are injected at a temperature greater than or equal to 150°C and/or less than or equal to 250°C, preferably at a temperature of 200°C.

9. The process according to any one of the preceding claims, in combination with claim 2, wherein the first mold cover (52) comprises an annular groove, such that the molded annular part (26) comprises an inner annular rib.

10. A fabrication process for a shoe sole (14) comprising the steps of:
(a) providing a mounting sole (18);
(b) providing an outer sole (22), by implementing the process according to any one of the preceding claims; and
(c) combining the inner (18) and outer (22) soles, in particular by adhering and/or sewing.

11. A fabrication process for a shoe (10) comprising the steps of:
(1) supplying an upper (12);
(2) providing a shoe sole (14), by implementing the process according to claim 10; and
(3) combining the upper (12) and the shoe sole (14), in particular by adhesive and/or sewing.

12. A two-colored shoe outer sole (22) comprising a central part (24), with a first color, and an annular part (26) with a second color, projecting laterally from the edge of the central part (24), **characterized in that** the central part (24) is overmolded by injection onto the annular part (26), in particular by implementing an outer sole fabrication process according to any one of claims 1 to 10, wherein, preferably, the central part (24) has an extra thickness at the heel (30) and/or the annular part (26) comprises a portion (26i) extending over the central part (24), preferably still at the periphery of the central part (24).

13. A shoe sole (14) comprising an outer sole (22) according to claim 12 and a mounting sole (18), where the mounting sole (18) and the outer sole (22) are fixed together, in particular by adhering and/or sewing, the shoe sole preferably further comprising a heel (20), interposed between the mounting sole (18) and the outer sole (22), where the heel (20) is preferably still adhered to the mounting sole(18).

14. The shoe sole according to claim 13, further comprising an insole (16) arranged such that the mounting sole (18) is interposed between the insole (16) and the outer sole (22), wherein, preferably, the insole (16) is leather or plastic and/or the mounting sole (18) comprises at least one cardboard layer, preferably still at least a plurality of cardboard layers or is in whole or part plastic.

15. A shoe (10) comprising an upper (12) fixed to a shoe sole (14) according to any one of claims 13 or 14.
